# EUROPEAN PATENT SPECIFICATION

(11) **EP 2 821 377 B1**
(45) Date of publication and mention of the grant of the patent: **13.09.2017**
(21) Application number: 13738185.1
(22) Date of filing: 17.01.2013
(51) Int. Cl.: C03B 37/012, C03B 37/014

(54) **METHODS FOR MANUFACTURING OPTICAL FIBER PREFORMS**
VERFAHREN ZUR HERSTELLUNG OPTISCHEN FASERVORFORMEN
PROCÉDÉS DE FABRICATION DES PREFORMES POUR LES FIBRES OPTIQUES

(30) Priority: 19.01.2012 JP 2012009382
(43) Date of publication of application: 07.01.2015
(73) Proprietor: Kohoku Kogyo Co., Ltd., Nagahama-shi, Shiga 529-0241 (JP)
(72) Inventor: IMOTO, Katsuyuki, Nagahama-shi Shiga 529-0241 (JP); ISHII, Futoshi, Nagahama-shi Shiga 529-0241 (JP)
(74) Representative: Hoeger, Stellrecht & Partner Patentanwälte mbB
(86) International application number: PCT/JP2013/050720
(87) International publication number: WO 2013/108806

(56) References cited:
- WO-A1-2010/029147
- JP-A- H0 971 431
- JP-A- H04 331 731
- JP-A- S60 137 844
- JP-A- 2003 238 203
- JP-A- 2005 225 753
- JP-A- 2009 227 548
- JP-A- 2010 215 458
- JP-A- 2012 002 959
- JP-A- 2012 002 959
- US-A- 5 049 175
- US-A1- 2005 172 674
- US-A1- 2011 132 038
- SHOICHI SUDO ET AL. SENTAN HIKARI ELECTRONICS SERIES 13 HIKARI FIBER TO HIKARI FIBER ZOFUKUKI -MASUMASU ZODAI SURU JOHOKA JIDAI DENO SONO YAKUWARI 01 September 2006, pages 43, 86 - 88, 123 TO 124, XP008175019

## Description

### TECHNICAL FIELD

The present invention relates to the manufacture of a base material for an optical fiber including a core part and a cladding part, and, more particularly, to a method for manufacturing an optical fiber base material having a special structure which includes a large number of empty holes, voids and the like.

### BACKGROUND ART

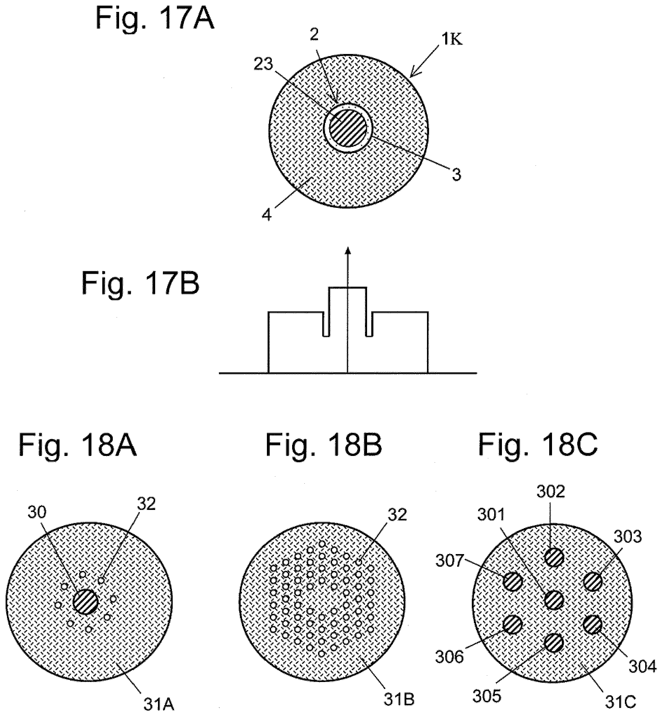

Along with a technical progress of optical fibers, optical fibers having special structures have been developed. Examples of such optical fibers having special structures are illustrated in Figs. 18A-18C. Fig. 18A illustrates a hole assisted fiber, Fig. 18B illustrates a photonic crystal fiber, and Fig. 18C illustrates a multi-core fiber. Optical fiber base materials for these optical fibers are manufactured through a plurality of complicated, troublesome and costly processing steps, compared with general optical fibers.

That is, with regard to the hole assisted fiber, first, using a VAD method (vapor phase axial deposition method), a core material 30 is formed in the center of a base material, and a cladding material 31A is formed in the outer periphery of the core material 30, whereby a first base material is manufactured. Subsequently, a plurality of through-holes 32 are opened in the longitudinal direction in the cladding material 31A formed in the outer periphery of the core 30 of the first base material, by mechanical cutting using a drill or ultrasonic waves, whereby the first base material is processed into a first base material with through-holes. After that, the first base material with the through-holes is washed, dehydrated and dried, whereby a hole assisted fiber base material is completed. The hole assisted fiber is manufactured by drawing this base material.

With regard to the photonic crystal fiber, first, a quartz glass base material 31B is manufactured using the VAD method. After that, several tens or more of through-holes 32 are opened in the longitudinal direction in the quartz glass base material 31B by the mechanical cutting described above, whereby the quartz glass base material 31B is processed into a quartz glass base material with through-holes. Then, the quartz glass base material with the through-holes is washed, dehydrated, dried, and heated, whereby a photonic crystal fiber base material is completed. The photonic crystal fiber is manufactured by drawing this base material. According to another known method for manufacturing the photonic crystal fiber, a plurality of glass thin tubes are bundled and drawn to be configured as a fiber.

With regard to the multi-core fiber, first, a first base material 31C made of a SiO₂ rod is manufactured using the VAD method. Subsequently, a plurality of through-holes that extend in the longitudinal direction are opened at preset intervals in the first base material 31C by the mechanical cutting described above, whereby the first base material 31C is processed into a base material with through-holes. After this step, the base material with the through-holes is washed, dehydrated, dried, and heated. Core base materials 301 to 307 manufactured in a separate process are respectively inserted into the through-holes, and the core base materials 301 to 307 are respectively fused to the inner surfaces of the through-holes, whereby a solid multi-core fiber base material is obtained. Then, the multi-core fiber is manufactured by drawing this multi-core fiber base material.

### CITATION LIST

### PATENT LITERATURE

[Patent Literature 1] JP 2003-040637 A
[Patent Literature 2] JP 2003-342031 A
[Patent Literature 3] JP 2003-342032 A
[Patent Literature 4] JP 2004-339004 A
[Patent Literature 5] JP 2005-263576 A
[Patent Literature 6] JP 2006-044950 A
[Patent Literature 7] JP 2006-069871 A
[Patent Literature 8] JP 2007-072251 A
[Patent Literature 9] JP 2008-310034 A
[Patent Literature 10] JP 2009-149470 A
[Patent Literature 11] JP 2010-173917 A.
[Patent Literature 12] US 2005/0172674 A1 discloses a method of fabricating a preform used for producing a holey fiber having air holes therein. The method includes the steps of preparing a tubular mold having a plurality of pins for forming a plurality of air holes aligned in a predetermined pattern, injecting silica slurry including a monomer and a dimer into the tubular mold and forming silica slurry into a gel, demolding the gel from the pins and the tubular mold, and drying and sintering the gel formed with air holes.

### SUMMARY OF INVENTION

### TECHNICAL PROBLEM

As described above, all the optical fibers having the special structures require the plurality of complicated, troublesome and costly processing steps at the stage of manufacturing the optical fiber base material.

Another difficult problem is that an optical loss factor is added in the processing steps. Still another problem is that it is difficult to control the core diameter and the outer diameter of the optical fiber base material with high precision.

In order to make the hole assisted fiber and the photonic crystal fiber, it is necessary to perform the steps of: precisely mechanically opening the plurality of through-holes in the longitudinal direction in the optical fiber base material manufactured using the VAD method; polishing the inner surfaces of the through-holes; and dehydrating the base material in which the through-holes are opened. In order to make the multi-core fiber, it is necessary to perform the steps of: mechanically opening the plurality of through-holes; then polishing the inner surfaces of the through-holes; respectively inserting the core rod materials (core base materials) into the through-holes; and fusing the core rod materials to the inner surfaces of the through-holes. These steps require much cost.

A next problem is that an optical loss factor is added in each step. Examples of the optical loss factor include: a cause of a scattering loss due to roughness of the inner surfaces of the through-holes; a cause of an absorption loss due to impurities attached to the inner surfaces of the through-holes; and a cause of an absorption loss due to impurities attached to the outer periphery of the core rod. If the optical loss factor is added, an optical loss increases at the stage of manufacturing the optical fiber from the optical fiber base material.

A further problem is that it is not easy to open the through-holes with high dimensional precision in the longitudinal direction from a glass end, by the mechanical cutting using the drill or the ultrasonic waves. Moreover, the work of polishing or etching the inner surfaces of the through-holes to enhance the dimensional precision of the through-holes and reduce the roughness of the inner surfaces, which is performed after opening the through-holes, is very troublesome. In short, it is difficult to open the through-holes with high dimensional precision, low surface roughness, high straightness, and high roundness in the longitudinal direction in the long optical fiber base material, and hence it is difficult to achieve the long optical fiber with a low scattering loss.

Still another problem is that it is difficult to precisely control the core diameters and the outer diameters of the optical fiber base materials manufactured using the VAD method, for the hole assisted fiber, the photonic crystal fiber, and the multi-core fiber. As described above, the conventional base materials for the hole assisted fiber, the photonic crystal fiber, and the multi-core fiber have many problems in scattering loss, surface roughness, and dimensional precision. Moreover, because the conventional base materials are manufactured using a method with very low productivity, the prices of the optical fibers are very high. Further, it is difficult to control, with high dimensional precision, structural parameters of the optical fibers, such as the outer diameter, the core diameter, the ratio of the outer diameter to the core diameter, the core interval, the inner diameter of the through-hole, and the through-hole interval of the optical fibers, and the reproducibility is low.

In view of the above, the present invention has an object to provide a method of manufacturing an optical fiber base material that can solve the above-mentioned conventional various problems.

### SOLUTION TO PROBLEM

A first invention of the present application is an invention of a method for manufacturing an optical fiber base material. Specifically, the present invention provides a method for manufacturing an optical fiber base material, including:
arranging a rod containing SiO₂ family glass for core in a center of a container;
pouring a hardening-resin-containing SiO₂ glass raw material solution for cladding layer and a hardener into the container;
solidifying the glass raw material solution through a self-hardening reaction;
then removing the container from the solidified material; and
drying the solidified material and heating the solidified material in chlorine gas, to manufacture an optical fiber base material in which a SiO₂ cladding layer is formed in an outer periphery of the rod containing SiO₂ family glass for core.

Here, the "a hardening-resin-containing SiO₂ glass raw material solution for cladding layer" refers to, for example, a glass raw material solution containing silica powder, distilled water, dispersant, and a hardening resin.

The above-mentioned manufacturing method may further include:
arranging a plurality of metal rods in the container such that the metal rods surround the outer periphery of the rod containing SiO₂ family glass for core placed in the container;
then pouring the hardening-resin-containing SiO₂ glass raw material solution for cladding layer and the hardener into the container; and
removing the container and the metal rods from the solidified material, to form a plurality of empty holes in the SiO₂ cladding layer.

Moreover, the present invention provides a method for manufacturing an optical fiber base material, including:
arranging rods containing SiO₂ family glass for core in a container at desired intervals;
pouring, in this state, a hardening-resin-containing SiO₂ glass raw material solution for cladding layer and a hardener into the container;
solidifying the glass raw material solution through a self-hardening reaction;
then removing the container from the solidified material; and
drying the solidified material and heating the solidified material in chlorine gas, to manufacture an optical fiber base material for a multi-core optical fiber.

Further, the present invention provides a method for manufacturing an optical fiber base material, including:
arranging a plurality of metal rods at preset intervals in a center of a container and around the center;
pouring a hardening-resin-containing SiO₂ glass raw material solution for cladding layer and a hardener into the container;
solidifying the glass raw material solution through a self-hardening reaction;
then removing the container and the metal rods from the solidified material; and
drying the solidified material and heating the solidified material in chlorine gas, to manufacture an optical fiber base material in which a plurality of empty holes are formed in a center of a SiO₂ cladding layer and around the center.

Furthermore, the present invention provides a method for manufacturing an optical fiber base material, including:
arranging a plurality of metal rods at preset intervals around a center of a container;
pouring a hardening-resin-containing SiO₂ glass raw material solution for cladding layer and a hardener into the container;
solidifying the glass raw material solution through a self-hardening reaction;
then removing the container and the metal rods from the solidified material; and
drying the solidified material and heating the solidified material in chlorine gas, to manufacture an optical fiber base material in which a plurality of empty holes are formed around a center of a SiO₂ cladding layer.

Unlike the above-mentioned manufacturing methods, no empty hole exists in the center of the cladding layer of the optical fiber base material obtained according to this manufacturing method.

Furthermore, the present invention provides a method for manufacturing an optical fiber base material, including:
arranging a second container in a center of a first container having a circular external shape and a circular internal shape, the second container having a circular external shape and a quadrangular internal shape or having a quadrangular external shape and a circular internal shape, the second container including at least three thin parts in the wall at which the internal surface approaches the external surface;
arranging a rod containing SiO₂ family glass for core in a center of the second container;
pouring a hardening-resin-containing SiO₂ glass raw material solution for cladding layer ad a hardener into a space between the first container and the second container and into the second container;
solidifying the glass raw material solution through a self-hardening reaction;
then removing the first container and the second container from the solidified material; and
drying the solidified material and heating the solidified material in chlorine gas, to manufacture an optical fiber base material.

A second, non-claimed part of the present disclosure of the present application concerns an optical fiber base obtainable by the claimed methods of the present invention. Specifically, the present disclosure discloses an optical fiber base material including: a rod containing SiO₂ family glass for core; and a SiO₂ cladding layer that covers an outer periphery of the rod containing SiO₂ family glass for core. The SiO₂ cladding layer is a layer formed by solidifying a material in the form of liquid. An outer peripheral surface of the rod containing SiO₂ family glass for core and the SiO₂ cladding layer are in tight contact with each other. Surface roughness of an interface between the rod containing SiO₂ family glass for core and the SiO₂ cladding layer is less than 0.2 µm

The above-mentioned optical fiber base material may further include a plurality of empty holes formed by molding and arranged in the SiO₂ cladding layer so as to surround the outer periphery of the rod containing SiO₂ family glass for core.

Moreover, the present disclosure discloses an optical fiber base material including: a SiO₂ cladding layer; and a plurality of empty holes that are arranged at preset intervals in a center of the SiO₂ cladding layer and around the center. The empty holes are formed by molding.

Further, the present disclosure discloses an optical fiber base material including: a SiO₂ cladding layer; and a plurality of empty holes that are arranged at preset intervals around a center of the SiO₂ cladding layer. The empty holes are formed by molding. Unlike the above-mentioned optical fiber base materials, this optical fiber base material does not include any empty hole in the center of the SiO₂ cladding layer.

The empty holes are formed using, for example, metal rods as molding dies. Surface roughness of inner surfaces of the empty holes is equal to or less than 0.4 µm.

Moreover, the present disclosure discloses an optical fiber base material for a multi-core optical fiber, including: a SiO₂ cladding layer; and a plurality of rods containing SiO₂ family glass for core arranged in the SiO₂ cladding layer. The SiO₂ cladding layer is a layer formed by solidifying a material in the form of liquid. Outer peripheral surfaces of the rods containing SiO₂ family glass for core and the SiO₂ cladding layer are in tight contact with each other. Surface roughness of interfaces between the rods containing SiO₂ family glass for core and the SiO₂ cladding layer is less than 0.2 µm.

In the above-mentioned optical fiber base material for the multi-core optical fiber, refractive index distribution of at least one of the plurality of rods containing SiO₂ family glass for core may be different from that of the other rods containing SiO₂ family glass for core.

Moreover, in the above-mentioned optical fiber base material for the multi-core optical fiber, centers of the rods containing SiO₂ family glass for core may be each made of a SiO₂ glass layer to which an additive for enhancing a refractive index and a rare-earth element are added, and a type and/or an addition amount of the rare-earth element added to at least one of the plurality of rods containing SiO₂ family glass for core may be different from that of the other rods containing SiO₂ family glass for core.

Further, in the optical fiber base material of the present disclosure, surface roughness of an outer peripheral surface of the SiO₂ cladding layer is equal to or less than 0.4 µm.

Moreover, in the optical fiber base material of the present disclosure, the SiO₂ cladding layer is formed by solidifying a SiO₂ glass raw material solution containing a hardening resin and a hardener through a self-hardening reaction, drying the solidified material, and heating the solidified material in chlorine gas.

Furthermore, in the optical fiber base material of the present disclosure, the SiO₂ cladding layer has a circular or quadrangular external shape.

Moreover, the present disclosure discloses an optical fiber base material including: a SiO₂ glass tube having a circular external shape and a circular or quadrangular internal shape; and a rod containing SiO₂ family glass for core that is arranged inside the SiO₂ glass tube so as to be in contact with the inner surface of the SiO₂ glass tube at least three points. Surface roughness of an inner surface of the SiO₂ glass tube is equal to or less than 0.4 µm.

Further, in the optical fiber base material of the present disclosure, the rod containing SiO₂ family glass for core includes: a SiO₂ glass layer to which an additive for enhancing a refractive index is added; and a SiO₂ layer to which the additive is not added, the SiO₂ layer being provided in an outer periphery of the SiO₂ glass layer.

Furthermore, in the optical fiber base material of the present disclosure, the rod containing SiO₂ family glass for core includes: a SiO₂ glass layer to which an additive for enhancing a refractive index is added; a SiO₂ glass layer to which F is added, this SiO₂ glass layer being provided in an outer periphery of the former SiO₂ glass layer; and a SiO₂ glass layer to which the additive and F are not added, this SiO₂ glass layer being provided in an outer periphery of the SiO₂ glass layer to which F is added.

Moreover, in the optical fiber base material of the present disclosure, the rod containing SiO₂ family glass for core includes: a SiO₂ glass layer to which an additive for enhancing a refractive index is added; and a SiO₂ thin layer that covers an outer periphery of the SiO₂ glass layer.

Further, in the optical fiber base material of the present disclosure, a rare-earth element may be further added to the SiO₂ glass layer to which the additive for enhancing the refractive index is added.

### ADVANTAGEOUS EFFECTS OF INVENTION

According to a manufacturing method of the present invention, a rod containing SiO₂ family glass for core is arranged in the center of a container, and in this state, a hardening-resin-containing SiO₂ glass raw material solution for cladding layer and a hardener are poured into the container, the glass raw material solution is solidified through a self-hardening reaction, the container is then removed from the solidified material, and the solidified material is dried and heated in chlorine gas, whereby an optical fiber base material in which a SiO₂ cladding layer is formed in the outer periphery of the rod containing SiO₂ family glass for core can be obtained. According to the manufacturing method of the present invention, if the size of the container (in the case of a circular container, the inner diameter and the length (height) of the container) is set to be large, a large-diameter optical fiber base material can be easily achieved, whereby a long optical fiber can be obtained.

In addition, the glass raw material liquid in the form of liquid comes into contact with the outer periphery of the rod containing SiO₂ family glass for core, and is solidified, whereby the SiO₂ cladding layer is formed. Hence, the outer peripheral surface of the rod and the SiO₂ cladding layer are in tight contact with each other, and the SiO₂ cladding layer of uniform composition can be thickly formed in the outer periphery of the rod. As a result, the interface between the outer periphery of the rod containing SiO₂ family glass for core and the SiO₂ cladding layer can be made adequately smooth, and hence an optical fiber with an very low scattering loss on this interface can be achieved.

Further, according to the present invention, with the use of a stainless-steel container having an inner surface that is mirror-polished to a surface roughness of 0.2 µm or less (preferably 0.01 µm to 0.03 µm), the surface roughness of the outer peripheral surface of the SiO₂ cladding layer can be made adequately smooth, that is, equal to or less than 0.4 µm. Moreover, because the outer shape of the SiO₂ cladding layer can be achieved with high dimensional precision by the inner shape of the container, an optical fiber base material kept with high dimensional precision can be achieved, and an optical fiber base material having high straightness and roundness can be manufactured. Accordingly, an optical fiber obtained by drawing such an optical fiber base material can have extremely high mechanical strength and dimensional precision. It is experimentally known that, if the hardening-resin-containing SiO₂ glass raw material solution for cladding layer and the hardener are poured into the container and are solidified and if the solidified material is then heated at high temperature, the solidified material is shrunk to about 82% of the size before the heating at high temperature, and hence the outer diameter of the optical fiber base material may be designed in consideration of this shrinkage ratio (18% (100 - 82) %). Moreover, even if the solidified material is shrunk, the outer peripheral surface of the obtained optical fiber base material (SiO₂ cladding layer) is kept in a mirrored state.

Moreover, the glass raw material solution in the form of liquid comes into contact with the outer periphery of the rod containing SiO₂ family glass for core, and is solidified, whereby the SiO₂ cladding layer of uniform composition is formed. Hence, an optical fiber with a very low scattering loss can be achieved. As described above, the inner surface and the outer surface of the optical fiber base material can be formed in a mirrored state, and structural parameters of the optical fiber base material, such as the outer diameter and the core diameter, can be achieved with high dimensional precision as designed. Moreover, the length of the optical fiber base material can be easily changed from approximately 20 cm to even approximately 100 cm by changing the length of the container. A so-called ultralarge-size optical fiber base material can be achieved.

Moreover, according to the present invention, the external shape of the optical fiber base material can be easily achieved as a desired shape such as a circular shape, a quadrangular shape, or a polygonal shape with high dimensional precision by only changing the shape of the container, and hence an optical fiber suited to various purposes (for communications, for medical use, for illumination, for processing, for energy transmission, and the like) can be achieved.

Moreover, a plurality of metal rods are arranged in the container so as to surround the outer periphery of the rod containing SiO₂ family glass for core arranged in the container, the hardening-resin-containing SiO₂ glass raw material solution for cladding layer and the hardener are poured into the container, the glass raw material solution is solidified through the self-hardening reaction, the container and the metal rods are then removed from the solidified material, and the solidified material is then dried and heated in chlorine gas, whereby an optical fiber base material in which a plurality of empty holes are formed in the SiO₂ cladding layer can be obtained. That is, the empty holes are formed by a molding process using the metal rods as molding dies. With the use of circular metal rods each having a surface that is sufficiently mirror-polished to a mirrored state (a surface roughness of 0.03 µm or less) and having high dimensional precision and high straightness and roundness, an optical fiber base material including a plurality of empty holes each having an inner surface in a mirrored state can be obtained. Because the surface roughness of the inner surfaces of the empty holes is very low as described above, optical fiber base materials for a hole assisted fiber and a photonic crystal fiber with a low scattering loss can be achieved. In the case where the surface roughness of the metal rods is equal to or less than 0.03 µm, the surface roughness of the inner surfaces of the empty holes of the obtained optical fiber base material is equal to or less than 0.4 µm Moreover, the obtained optical fiber base material can include the empty holes each having an inner shape with high dimensional precision, high straightness, and high roundness, and can have an appropriate interval of the empty holes. Hence, an optical fiber having high optical properties (such as a cutoff wavelength, a mode field diameter, a numerical aperture, and a zero-dispersion wavelength) can be obtained with high reproducibility.

Another characteristic of the above-mentioned method is that a step of precisely mechanically opening through-holes and a step of polishing the inner surfaces of the through-holes are not required. In the case where through-holes are opened in glass using a drill as in conventional cases, the surface roughness of the inner surfaces of the through-holes is approximately 15 µm on average, and the highest surface roughness of the through-holes is approximately 17 µm. Even if the inner surfaces of the through-holes having such surface roughness are polished thereafter, the surface roughness is barely improved to approximately 4 µm on average and approximately 6 µm at the largest. In addition, it is known that the straightness and roundness of the through-holes become worse as the through-holes become longer, and this adversely affects optical properties of the obtained optical fiber. As is apparent from the above, according to the present invention, base materials for a hole assisted fiber and a photonic crystal fiber having high-performance properties can be achieved through simple steps and a closed system (a system into which loss factors are not mixed from the outside).

If a plurality of rods containing SiO₂ family glass for core are arranged so as to surround the outer periphery of the rod containing SiO₂ family glass for core arranged in the center of the container, a multi-core fiber base material in which an unnecessary scattering loss on the interface between each of the outer peripheries of the rods containing SiO₂ family glass for core and the SiO₂ cladding layer is substantially reduced can be achieved with an very low scattering loss. Moreover, there is another advantage that the core shape, the core interval, and the fiber outer shape of a multi-core fiber can be achieved with high dimensional precision being kept. The fact that these can be achieved with high dimensional precision is very advantageous when multi-core fibers are connected to each other or a connector is connected to an end of a multi-core fiber.

A conventional manufacturing method requires the steps of: mechanically opening through-holes; then polishing the inner surfaces of the through-holes; respectively inserting core rod materials into the through-holes; and then fusing for eliminating gaps between the through-holes and the core rod materials by heating at high temperature, to make a solid base material, whereas the present invention has a big characteristic that these steps are not required.

Moreover, if the refractive index distribution of at least one of the plurality of rods containing SiO₂ family glass for core is made different from that of the other rods containing SiO₂ family glass for core, optical signals can be transmitted in a different transmission state through at least one of the cores of the multi-core fiber. Further, if the relative refractive index difference between the plurality of rods containing SiO₂ family glass for core and the SiO₂ cladding layer is made large, the plurality of cores can be arranged close to one another. Hence, the degree of freedom in fiber design becomes higher, and larger-volume information can be transmitted.

Moreover, circular metal rods each having a surface that is sufficiently mirror-polished to a mirrored state (a surface roughness of 0.03 µm or less) and having high dimensional precision and high straightness and roundness are arranged in a center of a container and around the center. In this state, a quartz glass solution containing a hardening resin (a hardening-resin-containing SiO₂ glass raw material solution for cladding layer) and a hardener are poured into the container, and are solidified through a self-hardening reaction. Then, the metal rods and the container are removed. After that, the solidified material is dried and heated at high temperature, whereby an optical fiber base material in which a plurality of empty holes are formed at preset intervals in the center of the SiO₂ cladding layer and around the center can be obtained. The empty holes each have an inner surface in a mirrored state (in the case where the surface roughness of the metal rods is equal to or less than 0.03 µm, the surface roughness of the inner surfaces of the empty holes of the obtained optical fiber base material is equal to or less than approximately 0.4 µm). Hence, a photonic bandgap fiber base material having a very low scattering loss, high dimensional precision, and high optical properties (such as a cutoff wavelength, a mode field diameter, a numerical aperture, and a zero-dispersion wavelength) other than the loss can be obtained.

Moreover, a second container is arranged in a center of a first container having a circular external shape and a circular internal shape, the second container having a circular external shape and a quadrangular internal shape or having a quadrangular external shape and a circular internal shape, the second container including at least three thin parts in the wall at which the internal surface approaches the external surface. A rod containing SiO₂ family glass for core is arranged in a center of the second container. A hardening-resin-containing SiO₂ glass raw material solution for cladding layer and a hardener are poured into a space between the first container and the second container and into the second container. Then, the glass raw material solution is solidified through a self-hardening reaction. Then, the first container and the second container are removed from the solidified material. After that, the solidified material is dried and heated in chlorine gas, whereby an optical fiber base material can be obtained, the optical fiber base material including: a SiO₂ glass tube having a circular external shape and a circular or quadrangular internal shape; and the rod containing SiO₂ family glass for core that is arranged inside the SiO₂ glass tube so as to be in contact with the inner surface of the SiO₂ glass tube at least three points. According to this method, with the use of the stainless-steel first container and the stainless-steel second container each having an inner surface that is mirror-polished to a surface roughness of 0.2 µm or less (preferably 0.01 µm to 0.03 µm), the optical fiber base material in which the surface roughness of each of the outer peripheral surface and the inner surface of the SiO₂ glass tube is equal to or less than 0.4 µm can be obtained.

Moreover, the rod containing SiO₂ family glass for core includes: a SiO₂ glass layer to which an additive for enhancing a refractive index is added; and a SiO₂ layer to which the additive is not added, the SiO₂ layer being provided in the outer periphery of the SiO₂ glass layer. With this configuration, an optical fiber base material having a high numerical aperture can be obtained. Such an optical fiber base material can be used for various purposes.

Moreover, the rod containing SiO₂ family glass for core includes: a SiO₂ glass layer to which an additive for enhancing a refractive index is added; and a SiO₂ thin layer that covers the outer periphery of the SiO₂ glass layer. Alternatively, the rod containing SiO₂ family glass for core includes: a SiO₂ glass layer to which an additive for enhancing a refractive index is added; a SiO₂ glass layer to which F is added, this SiO₂ glass layer being provided in the outer periphery of the former SiO₂ glass layer; and a SiO₂ glass layer to which the additive and F are not added, the SiO₂ glass layer being provided in the outer periphery of the SiO₂ glass layer to which F is added. With these configurations, an optical fiber base material having a large refractive index difference between the core and the cladding material can be achieved. Moreover, if the refractive index difference can be made large as described above, when a multi-core fiber is manufactured using the optical fiber base material thus configured, interference (that is, crosstalk) among optical signals propagating through cores can be made small in the manufactured multi-core fiber. Moreover, because the SiO₂ glass layer to which F is added is provided, a larger number of cores can be provided by arranging the cores at a smaller core interval, and larger-volume information can be transmitted using one multi-core fiber.

Moreover, if a rare-earth element is further added to the SiO₂ glass layer to which the additive for enhancing the refractive index is added, functional fibers such as a fiber optical amplifier and a fiber laser can be obtained. Functional fibers having different performance can be achieved by changing the type and the addition amount of the rare-earth element added to the SiO₂ glass layer to which the additive for enhancing the refractive index is added. Particularly in the case of the multi-core fiber, an optical amplifier and a laser having different degrees of amplification and different wavelengths can be achieved by changing the type and the addition amount of the rare-earth element added to the SiO₂ glass layer to which the additive for enhancing the refractive index is added, of each of the plurality of rods containing SiO₂ family glass for core.

### BRIEF DESCRIPTION OF DRAWINGS

Fig. 1A and Fig. 1B are respectively a front cross sectional view and a side view of an optical fiber base material according to a first embodiment of an optical fiber base material made by a method of the present invention.
Fig. 2 is a flowchart illustrating a process of manufacturing the optical fiber base material.
Fig. 3A and Fig. 3B are respectively a front view and a cross sectional view of a mold container for manufacturing the optical fiber base material.
Fig. 4A and Fig. 4B are respectively a front cross sectional view and a side view of an optical fiber base material according to a second embodiment of the optical fiber base material made by a method of the present invention.
Fig. 5A and Fig. 5B are respectively a front view and a cross sectional view of a mold container for manufacturing the optical fiber base material.
Fig. 6A and Fig. 6B are respectively a front cross sectional view and a side view of an optical fiber base material according to a third embodiment of the optical fiber base made by a method material of the present invention.
Fig. 7A and Fig. 7B are respectively a front cross sectional view and a side view of an optical fiber base material according to a fourth embodiment of the optical fiber base material made by a method of the present invention.
Fig. 8A and Fig. 8B are respectively a front cross sectional view and a side view of an optical fiber base material according to a fifth embodiment of the optical fiber base material made by a method of the present invention.
Fig. 9 is a front cross sectional view of an optical fiber base material according to a sixth embodiment of the optical fiber base material made by a method of the present invention.
Fig. 10A, Fig. 10B, and Fig. 10C are respectively a front cross sectional view and refractive index distribution views of the optical fiber base material according to the sixth embodiment of the optical fiber base material made by a method of the present invention.
Fig. 11A and Fig. 11B are respectively one example front cross sectional view and another example front cross sectional view of an optical fiber base material according to a seventh embodiment of the optical fiber base material made by a method of the present invention.
Fig. 12 is a front cross sectional view of an optical fiber base material according to an eighth embodiment of the optical fiber base material made by a method of the present invention.
Fig. 13A and Fig. 13B are respectively a front view and a cross sectional view of a mold container for manufacturing the optical fiber base material.
Fig. 14 is a front cross sectional view of an optical fiber base material according to a ninth embodiment of the optical fiber base material made by a method of the present invention.
Fig. 15A and Fig. 15B are respectively a front view and a cross sectional view of a mold container for manufacturing the optical fiber base material.
Fig. 16 is a front cross sectional view of an optical fiber base material according to a tenth embodiment of the optical fiber base material made by a method of the present invention.
Fig. 17A and Fig. 17B are respectively a front cross sectional view and a refractive index distribution view of an optical fiber base material according to an eleventh embodiment of the optical fiber base material made by a method of the present invention.
Fig. 18A, Fig. 18B, and Fig. 18C are views respectively illustrating cross sectional structures of conventional fibers.

### DESCRIPTION OF EMBODIMENTS

Hereinafter, embodiments of the manufacturing methods of the present invention are described with reference to the drawings.

### FIRST EMBODIMENT

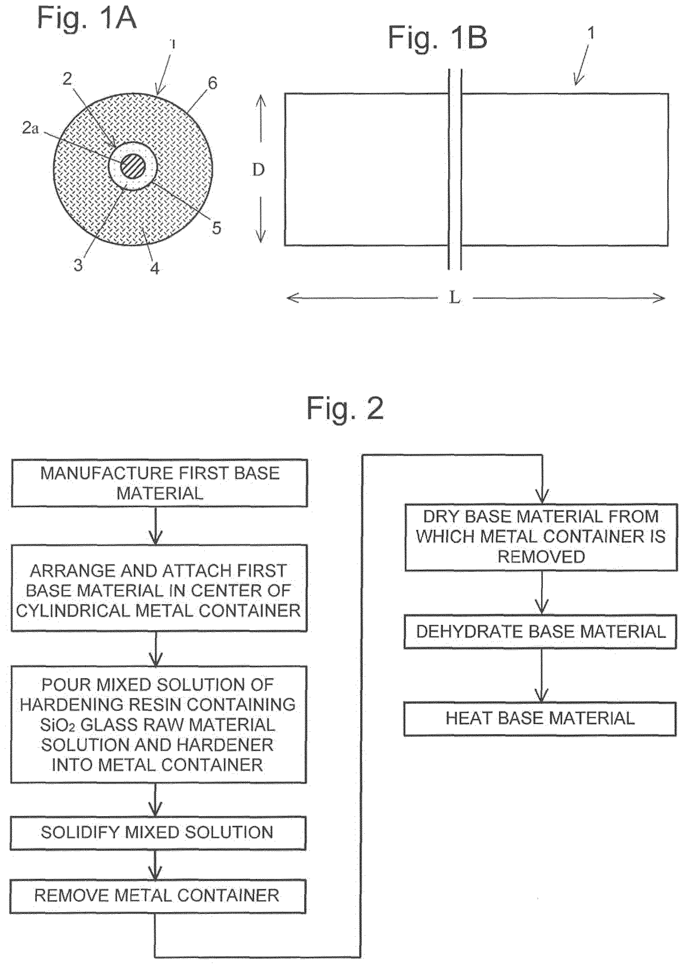

Figs. 1A and 1B illustrate a first embodiment of an optical fiber base material made by a methods of the present invention.

Fig. 1A is a front cross sectional view of the optical fiber base material, and Fig. 1B is a side view of the optical fiber base material. An optical fiber base material 1 of Figs. 1A and 1B includes: a SiO₂ glass rod 2 containing SiO₂ glass for a core (hereinafter, referred to as glass rod 2); and a SiO₂ cladding layer 4 that covers the outer periphery of the glass rod 2. The center of the glass rod 2 is made of a SiO₂ glass layer 2a to which GeO₂ is added within a range of 5 weight% to 25 weight%, and the outer periphery of the glass rod 2 is made of a SiO₂ glass layer 3. The glass rod 2 is formed according to a method of the present invention.

The SiO₂ cladding layer 4 is obtained by: pouring a quartz glass solution containing a hardening resin, and a hardener into a metal container; solidifying the quartz glass solution and the hardener through a self-hardening reaction; then removing the container; and then drying and heating the solidified material at high temperature. Reference sign 5 in Fig. 1A denotes the interface between the glass rod 2 and the SiO₂ cladding layer 4, and this interface is formed to be adequately smooth, which is a characteristic of the present embodiment. That is, the quartz glass solution in the form of liquid comes into contact with the outer periphery of the glass rod 2, and is solidified, whereby the SiO₂ cladding layer 4 is formed. Hence, the SiO₂ cladding layer 4 is evenly formed in the outer periphery of the glass rod 2, so that an optical fiber with a very low scattering loss can be achieved. Reference sign 6 in Fig. 1A denotes the outer periphery (outer peripheral surface) of the optical fiber base material 1. The diameter of the outer periphery 6 can be precisely controlled by the shape of the metal container, which is a characteristic of the present embodiment.

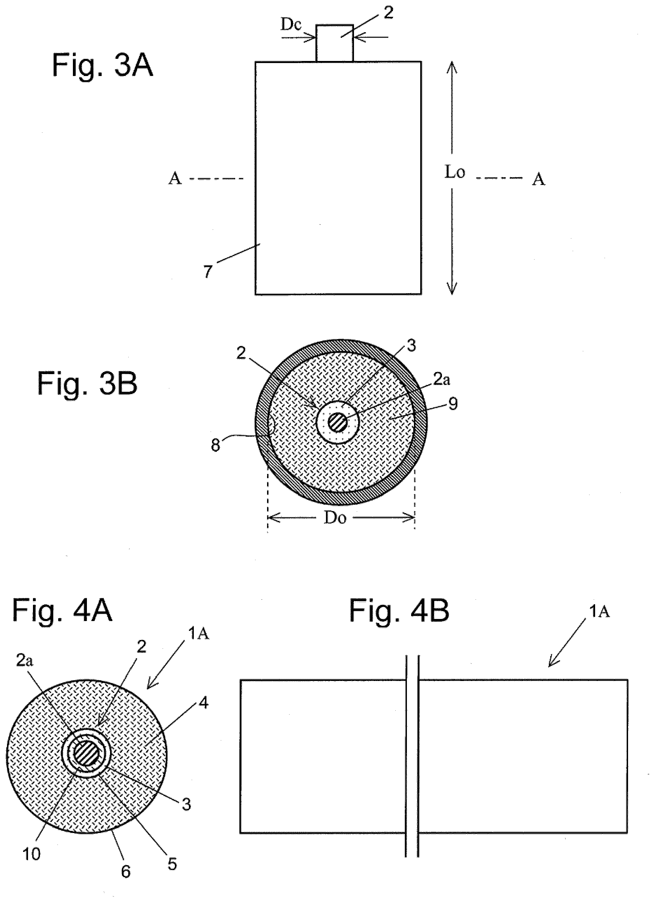

A specific method for manufacturing the optical fiber base material 1 of the present embodiment is illustrated in Fig. 2. Moreover, a structure of the metal container for manufacturing the optical fiber base material 1 is illustrated in Figs. 3A and 3B. As illustrated in Figs. 3A and 3B, a metal container 7 is a stainless-steel cylindrical container having an inner surface 8 that is mirror-polished to a surface roughness of 0.01 µm to 0.03 µm. The metal container 7 has an inner diameter D₀ of 152 mm and a length L₀ of 488 mm. The metal container 7 has such a half-split structure that enables the solidified material to be taken out after solidification of a solution 9 poured into the metal container 7. Moreover, the metal container 7 has a closed bottom, and includes an upper lid (not illustrated).

A first base material that is manufactured according to a VAD method and has a diameter Dc of 12 mm is arranged in the center of the metal container 7 configured as described above. The first base material corresponds to the glass rod 2 having the center to which GeO₂ is added within a range of 5 weight% to 25 weight%. After that, the mixed solution 9 of: the quartz glass solution containing the hardening resin; and the hardener is poured into the metal container 7, and is solidified through a self-hardening reaction. Then, the metal container 7 is removed. The resultant solidified material is dried and heated at high temperature in chlorine gas, whereby the optical fiber base material 1 in Figs. 1A and 1B is obtained. Here, the used quartz glass solution containing the hardening resin is prepared by adding silica powder having a particle diameter of 2 µm or less (preferably 1 µm or less) to a mixed solution of a dispersant (tetramethylammonium hydroxide solution) and distilled water. This is in order to suppress the shrinkage ratio to the size before the solidification to approximately 18% ((100-82) %), at the time of vitrification by drying and heating the solidified material at high temperature in the chlorine gas, and in order to suppress occurrence of breaks and cracks at the time of the vitrification. The used hardening resin is polyglycerol polyglycidyl ether (PGPE, DENACOL EX512 (Nagase ChemteX Corporation)) that is a liquid resin. The used hardener is triethylenetetramine (CAS No. 112-24-3). Then, in order to obtain the above-mentioned shrinkage ratio (18%), the blending ratios (weight %) of the above-mentioned materials are set such that the silica powder is 87%, the distilled water is 21.2%, the dispersant is 2.7%, and the hardening resin is 10.1%. Because the blending ratio of the silica powder is set to be high as described above, in the present embodiment, the shrinkage ratio at the time of the vitrification can be made low, and breaks and cracks can be prevented. Further, the amount of impurities such as CH groups and OH groups can be reduced.

With the use of the quartz glass solution containing the hardening resin as described above, shape control is veryeasy, and breaks and cracks hardly occur, compared with quartz glass making through a hydrolysis reaction between an organic oxysilane (for example, tetraethoxysilane) solution and pure water in a sol-gel method. Because quartz glass is obtained by the hydrolysis reaction in the sol-gel method, the generation rate of the quartz glass is low, and the shrinkage ratios in the radial direction and the axial direction of a base material are significantly different from each other. Hence, breaks and cracks occur at the time of vitrification. The occurrence of breaks and cracks is a critical problem for a large-size base material, and hence a large-size base material cannot be achieved. Moreover, in the sol-gel method, breaks and cracks are likely to occur unless the hydrolysis reaction is performed over as long a time as one day or more. Further, in order to suppress the occurrence of breaks and cracks, it is necessary to dry and heat the solidified material at high temperature over as long a time as ten days or more.

On the other hand, according to the method of the present embodiment, because the silica powder is solidified using the above-mentioned mixed solution, the shrinkage ratios in the radial direction and the axial direction are substantially the same as each other, and breaks and cracks hardly occur. Hence, the solidification takes less than 1/10 of the time required by the sol-gel method. Similarly, the drying takes less than 1/2 of the time required by the sol-gel method, and is performed at a low temperature of 50°C to 120°C. Moreover, if the quartz glass solution containing the hardening resin is defoamed in vacuum before being poured into the metal container, the solidified glass base material contains almost no void.

It is preferable that the heating at high temperature be performed in a chlorine gas atmosphere within a range of 1,300°C to 1,500°C, in order to evaporate and remove unnecessary substances in the glass base material. Moreover, according to the sol-gel method, the glass base material contains large amounts of CH groups, Si-H groups, OH groups, and other groups, and these impurities are very difficult to remove, and lead to a factor for an increase in loss in wavelength bands used in optical communications. Hence, a low-loss optical fiber is difficult to achieve according to the sol-gel method. On the other hand, as described later, a loss caused by CH groups, Si-H groups, and OH groups hardly occurs according to the method of the present invention.

Because the shrinkage ratio at the time of the vitrification of the solidified material is about 18% as described above, in the present embodiment, the vitrified optical fiber base material 1 having an outer diameter of 125 mm, a length of 400 mm, and a core diameter of 10 mm is obtained. The outer shape fluctuation of the optical fiber base material 1 is equal to or less than 0.5%, and the surface roughness of the optical fiber base material 1 is equal to or less than 0.1 µm. This is because the optical fiber base material 1 is manufactured using the stainless-steel metal container 7 having the inner surface 8 that is mirror-polished to a surface roughness of 0.01 µm to 0.03 µm. The even outer shape of the optical fiber base material 1 is very effective to achieve an optical fiber having an even shape. Moreover, the low surface roughness of the optical fiber base material 1 is very effective to enhance the mechanical strength of an optical fiber. Further, structural parameters (such as the core diameter and the outer diameter) of an optical fiber can be precisely set.

That is, in the present embodiment, the solidified material is shrunk by the vitrification substantially uniformly and slightly in the radial direction and the axial direction, and hence the structural parameters of the optical fiber base material 1 (that is, the optical fiber) can be easily designed.

The optical fiber base material 1 is fed and is drawn at a desired speed into a high-temperature electric furnace, whereby an optical fiber having an outer diameter of 125 µm and a core diameter of 10 µm is obtained. Although an optical fiber having a length of about 800 km can be obtained according to the method of the present embodiment, in this experiment, an optical fiber having a length of about 10 km is obtained, and a scattering loss is measured for the obtained optical fiber.

As a result, the loss is 0.23 dB/km at a wavelength of 1.55 µm. According to a detailed examination of the loss, a Rayleigh scattering loss is 0.14 dB/km, a scattering loss due to structure irregularity is 0.02 dB/km, and intrinsic light absorption by an infrared region and an ultraviolet region and light absorption by impurities are 0.07 dB/km. Such a result that the scattering loss due to the structure irregularity is very low backs up a characteristic of the present invention that the interface 5 between the glass rod 2 and the SiO₂ cladding layer 4 is evenly formed.

Further, the present embodiment has a characteristic that the outer shape dimensions of the optical fiber base material can be easily controlled by the dimensions of the metal container.

The sol-gel method is one of methods for manufacturing an optical fiber base material. According to the sol-gel method, a raw material (sol) in the form of liquid is poured into a mold container, is changed to a gel state, and is then dried and heated to be vitrified, whereby an optical fiber base material is manufactured. The sol-gel method is similar to the manufacturing method according to the present embodiment in that the raw material in the form of liquid is poured into the mold container. Meanwhile, according to the manufacturing method of the present embodiment, the size at the time of the vitrification of the solidified dried material is about 82% of the size before the vitrification (the shrinkage ratio is 18%) in both the radial direction and the axial direction, whereas, according to the sol-gel method, the size at the time of the vitrification by drying and heating is very different between the radial direction and the axial direction, specifically, there is a difference of 30% to 60%. Accordingly, according to the sol-gel method, breaks and cracks are likely to occur in the optical fiber base material, and manufacture of a large-size base material is difficult. Hence, the sol-gel method is inferior in dimensional precision to the manufacturing method of the present embodiment.

Moreover, according to the sol-gel method, normally, tetramethyl orthosilicate (TMOS) or tetraethyl orthosilicate (TEOS) is reacted with water to be changed to silica gel. Through this reaction, the silica gel unfavorably contains hydroxy groups (OH groups). It is difficult to remove the hydroxy groups in the course of drying, heating, and vitrifying the silica gel. Hence, an optical fiber base material obtained according to the sol-gel method contains the hydroxy groups, and an optical fiber manufactured using this base material is one with high loss.

On the other hand, according to the manufacturing method of the present embodiment, as described above, an optical fiber base material does not contain hydroxy groups, and hence an absorption loss of an optical fiber can be suppressed to be low. In addition, it is also confirmed that a loss caused by CH groups and Si-H groups does not occur. Accordingly, according to the present embodiment, a good optical fiber that is difficult to achieve according to the sol-gel method can be obtained.

### SECOND EMBODIMENT

Figs. 4A and 4B illustrate a second embodiment of the optical fiber base material made by a method of the present invention. Fig. 4A is a front cross sectional view of the optical fiber base material, and Fig. 4B is a side view of the optical fiber base material.

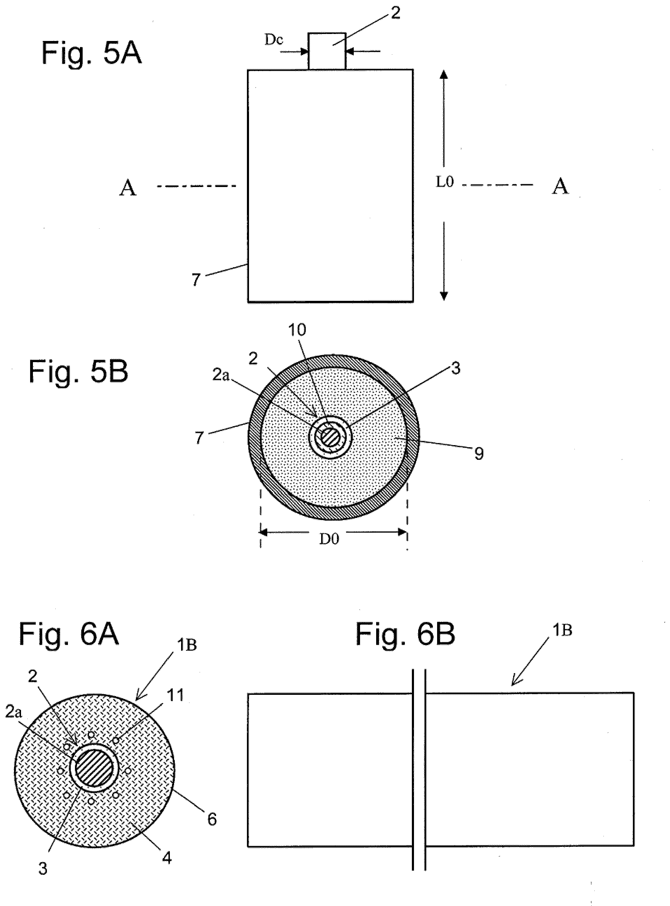

An optical fiber base material 1A of Figs. 4A and 4B is an embodiment of the manufacture of a large-diameter optical fiber base material. The optical fiber base material 1A is manufactured using a metal container illustrated in Figs. 5A and 5B. The glass rod 2 of the optical fiber base material 1A includes: the SiO₂ layer 2a to which a GeO₂ additive for enhancing a refractive index is added, in the center of the glass rod 2; a SiO₂ layer 10 to which F is added, in the outer periphery of the SiO₂ layer 2a; and the SiO₂ glass layer 3 to which F is not added, in the outer periphery of the SiO₂ layer 10. The SiO₂ cladding layer 4 is formed in the outer periphery of the glass rod 2, using the metal container 7 illustrated in Figs. 5A and 5B.

The metal container 7 is a stainless-steel container having an inner surface that is mirror-polished to a surface roughness of 0.01 µm to 0.03 µm. A first base material corresponding to the glass rod 2 having the above-mentioned structure is arranged in the center of the metal container 7. In this state, the mixed solution 9 of: the SiO₂ glass raw material solution containing the hardening resin; and the hardener is poured into the container 7. The solution 9 is solidified through a self-hardening reaction. Then, the metal container 7 is removed from the solidified material. The resultant solidified material is dried and heated at high temperature in chlorine gas, whereby the SiO₂ cladding layer 4 is formed. Characteristics of the optical fiber base material 1A are that: the relative refractive index difference between the glass rod 2 and the SiO₂ cladding layer 4 can be made larger; the diameter of the optical fiber base material 1A can be made larger; and a long optical fiber with a low scattering loss, high dimensional precision, and high mechanical strength can be manufactured.

### THIRD EMBODIMENT

Figs. 6A and 6B illustrate an embodiment of the manufacture of a hole assisted optical fiber base material of the present invention. Fig. 6A is a front cross sectional view of the optical fiber base material, and Fig. 6B is a side view of the optical fiber base material. An optical fiber base material 1B of Figs. 6A and 6B is manufactured using: the first base material (glass rod 2) described in the first embodiment; the metal container 7 (see Figs. 3A and 3B); and a plurality of stainless-steel metal rods (not illustrated) (each having a surface roughness of 0.03 µm or less). First, the first base material is arranged in the center of the metal container 7, and the plurality of stainless-steel metal rods are arranged at preset intervals in the outer periphery of the first base material. In this state, the mixed solution 9 of: the quartz glass solution containing the hardening resin; and the hardener is poured into the metal container 7. The mixed solution 9 is solidified through a self-hardening reaction. Then, the metal rods and the metal container 7 are removed from the solidified material. After that, the resultant solidified material is dried and heated at high temperature. In this way, obtained is the optical fiber base material 1B including: the glass rod 2 in the center of the optical fiber base material 1B; and eight empty holes 11 that are formed at preset intervals in the SiO₂ cladding layer 4 in the outer periphery of the glass rod 2.

Characteristics of the optical fiber base material 1B are that: all the roundness, the straightness, and the dimensional precision of the empty holes 11 are high; the dimensional precision of the interval of the empty holes 11 can be made high; and the surface roughness of the inner surfaces of the empty holes 11 can be made equal to or less than 0.1 µm Another characteristic of the optical fiber base material 1B is that the core diameter, the outer diameter, and the empty hole diameter, which are structural parameters of the optical fiber base material, can be achieved with high dimensional precision. Another characteristic of the optical fiber base material 1B is that the straightness, the roundness, and the dimensional precision of the optical fiber base material can be made high. Another characteristic of the optical fiber base material 1B is that, because the surface roughness of the inner surfaces of the empty holes can be suppressed to be equal to or less than 0.1 µm, low scattering loss properties of an optical fiber can be achieved. In particular, because the surface roughness of the inner surfaces of the empty holes can be suppressed to be equal to or less than 0.1 µm, the amount of increase in scattering loss caused by small bending (bending radius < 5 mm) can be reduced.

The biggest characteristic of the present embodiment is that it is not necessary to open through-holes by mechanical cutting, unlike conventional cases. Hence, the empty holes each having very low inner surface roughness can be formed. Moreover, because the shrinkage ratio at the time of the vitrification is low as described above, the empty holes shrink only slightly. Hence, the inner diameter of the empty holes and the interval of the empty holes can be achieved as designed. This is very advantageous to achieve desired optical properties with high reproducibility.

### FOURTH EMBODIMENT

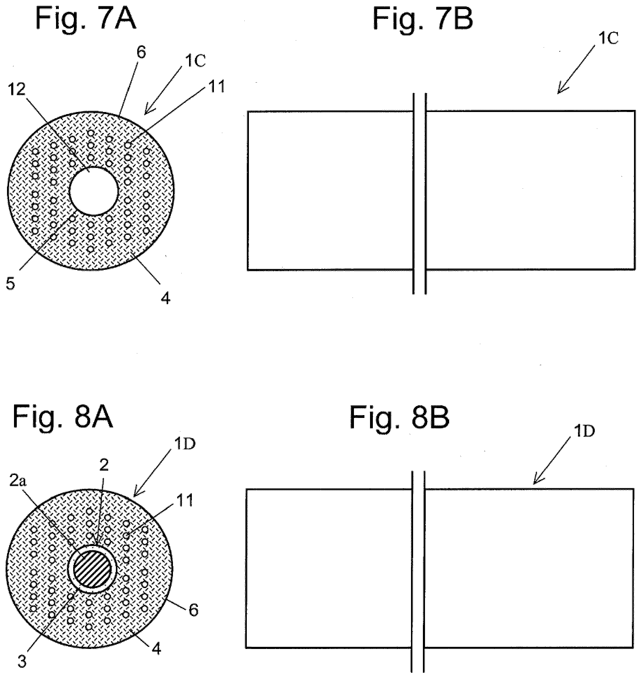

Figs. 7A and 7B illustrate an embodiment of a photonic bandgap optical fiber base material made by a method of the present invention. Fig. 7A is a front cross sectional view of the optical fiber base material, and Fig. 7B is a side view of the optical fiber base material. An optical fiber base material 1C of Figs. 7A and 7B is manufactured using a circular metal rod instead of the first base material described in the first embodiment, and the used metal rod has a surface that is sufficiently mirror-polished to a mirrored state (a surface roughness of 0.03 µm or less), and has high dimensional precision and high straightness and roundness.

First, the metal rod is arranged in the center of a metal container, and a plurality of metal rods (hereinafter, referred to as "second rods") thinner than the metal rod are arranged at preset intervals around the metal rod. Similarly to the metal rod, the plurality of second rods each have a surface that is sufficiently mirror-polished to a mirrored state (a surface roughness of 0.03 µm or less), and have high dimensional precision and high straightness and roundness. In this state, the quartz glass solution containing the hardening resin, and the hardener are poured into the container, and are solidified through a self-hardening reaction. Then, the metal rod, the second rods, and the metal container are removed from the solidified material. After that, the resultant solidified material is dried and heated at high temperature.

In this way, obtained is the optical fiber base material 1C including: an empty hole 12 in the center of the optical fiber base material 1C; and the plurality of empty holes 11 that are formed at preset intervals in the SiO₂ cladding layer 4 in the outer periphery of the empty hole 12. The surface roughness of the inner surface of the empty hole 12 of the actually manufactured optical fiber base material 1C is approximately equal to or less than 0.2 µm. Moreover, the surface roughness of the inner surfaces of the empty holes 11 is approximately equal to or less than 0.1 µm.

Because the surface roughness of the empty hole 12 in the center of the optical fiber base material 1C is very low as described above, optical signals can be transmitted with a low loss while being confined in the empty hole 12 such that an unnecessary radiation loss does not occur. Moreover, a scattering loss can be made very low. Hence, the photonic bandgap fiber base material having high optical properties is obtained.

Moreover, the SiO₂ cladding layer 4 obtained according to the above-mentioned method contains almost no impurities such as CH groups, OH groups, and transition metals, and hence the scattering loss of the optical fiber base material can be made further lower.

Although not illustrated, a photonic crystal fiber base material in which the empty hole 12 in the center of the optical fiber base material 1C is made solid is manufactured, and an optical fiber is manufactured by drawing this photonic crystal fiber base material. In a structure of the optical fiber, the outer diameter is 123 µm, the number of empty holes 11 is 40, the diameter of the empty holes 11 is 3 µm, and the interval of the empty holes 11 is 5.9 µm. The surface roughness of the inner surfaces of the empty holes 11 is equal to or less than 0.2 µm on average, and the surface roughness of the outer surface is equal to or less than 0.2 µm. Moreover, the loss is 0.8 dB/km at a wavelength of 1.55 µm, the loss is 1.2 dB/km at a wavelength of 1.31 µm, and the loss is 2 dB/km at a wavelength of 1.07 µm. The loss is low over an entire wavelength band for communications.

The breakdown of the "loss" is: a loss intrinsic to the material of the optical fiber (an ultraviolet absorption loss, an infrared absorption loss); a scattering loss intrinsic to the material of the optical fiber (Rayleigh scattering, Brillouin scattering, Raman scattering); an absorption loss resulting from a manufacturing process (an absorption loss due to impurities, OH groups, and an oxygen-related defect); and a scattering loss due to structure irregularity. The loss and the scattering loss intrinsic to the material of the optical fiber manufactured by a method of the present embodiment are substantially the same as those of a conventional optical fiber manufactured according to the VAD method. Hence, from the result that the optical fiber made by a method of the present embodiment exhibits low loss properties, it is verified that: the SiO₂ cladding layer contains almost no CH groups and Si-H groups and contains very few OH groups; and the scattering loss due to the structure irregularity is low. Moreover, from such low scattering loss properties, it is also verified that the surface roughness of the inner surfaces of the empty holes is low.

In addition, the present embodiment is more advantageous than a conventional manufacturing method in that the photonic crystal optical fiber having a structure with higher dimensional precision can be more easily manufactured at overwhelmingly lower cost with higher reproducibility. Further, in the present embodiment, the photonic crystal optical fiber can be manufactured while optical properties such as a dispersion value and a zero-dispersion wavelength of the optical fiber are precisely controlled.

### FIFTH EMBODIMENT

Figs. 8A and 8B illustrate another embodiment of the photonic crystal optical fiber base material made by a method of the present invention. Fig. 8A is a front cross sectional view of the optical fiber base material, and Fig. 8B is a side view of the optical fiber base material. An optical fiber base material ID of Figs. 8A and 8B is obtained in the following manner. First, the first base material described in the first embodiment is arranged in the center of a circular metal container, and a plurality of metal rods are arranged at preset intervals in the outer periphery of the first base material. In this state, a mixed solution of: a SiO₂ glass raw material solution containing a hardening resin; and a hardener is poured into the metal container, and is solidified through a self-hardening reaction of the mixed solution. Then, the metal rods and the metal container are removed from the solidified material. After that, the resultant solidified material is dried and heated at high temperature.

The optical fiber base material 1D includes: the glass rod 2; the SiO₂ cladding layer 4 that covers the outer periphery of the glass rod 2; and the plurality of empty holes 11 that are formed at preset intervals in the SiO₂ cladding layer 4. The glass rod 2 includes: the SiO₂ glass layer 2a to which a GeO₂ additive is added, in the center of the glass rod 2; and the SiO₂ glass layer 3 that covers the outer periphery of the SiO₂ glass layer 2a. Because the plurality of empty holes 11 are formed in the SiO₂ cladding layer 4 of the optical fiber base material 1D, the relative refractive index difference between the glass rod 2 as a core and the SiO₂ cladding layer 4 as a cladding material can be made large, and hence the numerical aperture can be made high. Moreover, also in the present embodiment, the interface between the SiO₂ glass layer 3 and the SiO₂ cladding layer 4 can be made even, and the surface roughness of the inner surfaces of the empty holes 11 can be made low. Hence, low scattering loss properties can be achieved.

### SIXTH EMBODIMENT

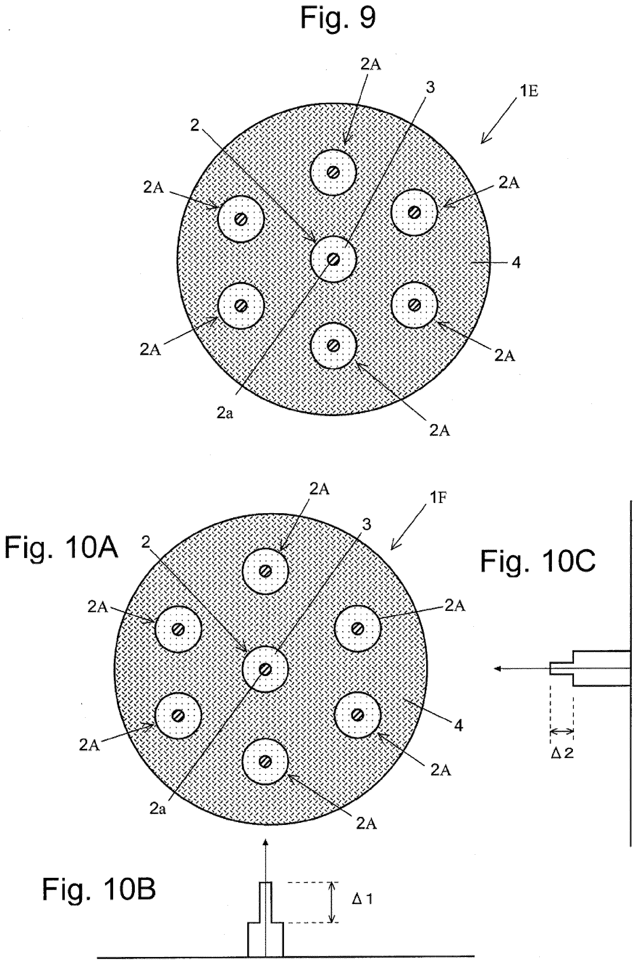

Fig. 9 illustrates an embodiment of a multi-core optical fiber base material made by a method of the present invention. Fig. 9 is a front cross sectional view of the optical fiber base material. An optical fiber base material IE of Fig. 9 includes: the glass rod 2 in the center of the optical fiber base material IE; and a plurality of glass rods 2A that are provided at preset intervals in the SiO₂ cladding layer 4 in the outer periphery of the glass rod 2. The optical fiber base material IE is manufactured in the following manner. First, a first base material corresponding to the glass rod 2 is arranged in the center of a metal container, and a plurality of second base materials corresponding to the glass rods 2A are arranged at preset intervals in the outer periphery of the first base material. In this state, a mixed solution of: a SiO₂ glass raw material solution containing a hardening resin; and a hardener is poured into the metal container, and is solidified through a self-hardening reaction of the mixed solution. After that, the metal container is removed from the solidified material, and the resultant solidified material is dried and heated at high temperature.

As a result, the SiO₂ cladding layer 4 is evenly formed around the glass rod 2 in the center, and around each of the plurality of glass rods 2A. Hence, the multi-core fiber base material with a very low scattering loss can be manufactured, and an unnecessary scattering loss on the interface between each of the glass rod 2 and the glass rods 2A and the SiO₂ cladding layer 4 is substantially reduced in the obtained multi-core fiber base material.

Moreover, for the multi-core optical fiber, it is most important to precisely control the dimensions of the plurality of cores and the interval of the cores. In this regard, in the present embodiment, the shapes of the cores (that is, the glass rod 2 and the glass rods 2A) and the interval of the cores can be easily controlled with high precision. Moreover, the present embodiment is also advantageous in that the outer shape of the multi-core optical fiber can be kept with high dimensional precision.

Further, unlike a conventional method for manufacturing a multi-core fiber, the present embodiment does not require the steps of: mechanically opening a plurality of through-holes; polishing the inner surfaces of the through-holes; inserting core rod materials respectively into the through-holes; and fusing for eliminating gaps between the through-holes and the core rod materials by heating at high temperature, to make a solid base material. Hence, the low-loss multi-core fiber with high dimensional precision can be manufactured at low cost and with high reproducibility.

### SEVENTH EMBODIMENT

Figs. 10A - 10C illustrate another embodiment of the multi-core optical fiber base material made by a method of the present invention. Fig. 10A is a front cross sectional view of an optical fiber base material IF, Fig. 10B is a refractive index distribution view of the glass rod 2 in the center of the optical fiber base material IF, and Fig. 10C is a refractive index distribution view of the glass rods 2A in the periphery of the optical fiber base material 1F. In the present embodiment, the refractive index distribution of the glass rod 2 in the center is made different from the refractive index distribution of the six glass rods 2A in the periphery. If the refractive index distribution (relative refractive index difference) of at least one of the plurality of glass rods is made different as described above, optical signals can be transmitted in a different transmission state through at least one of the cores of the multi-core fiber. Moreover, if the relative refractive index difference between the core and the cladding material is made large, the plurality of cores can be arranged close to one another. Hence, the degree of freedom in fiber design becomes higher, and larger-volume information can be transmitted.

### EIGHTH EMBODIMENT

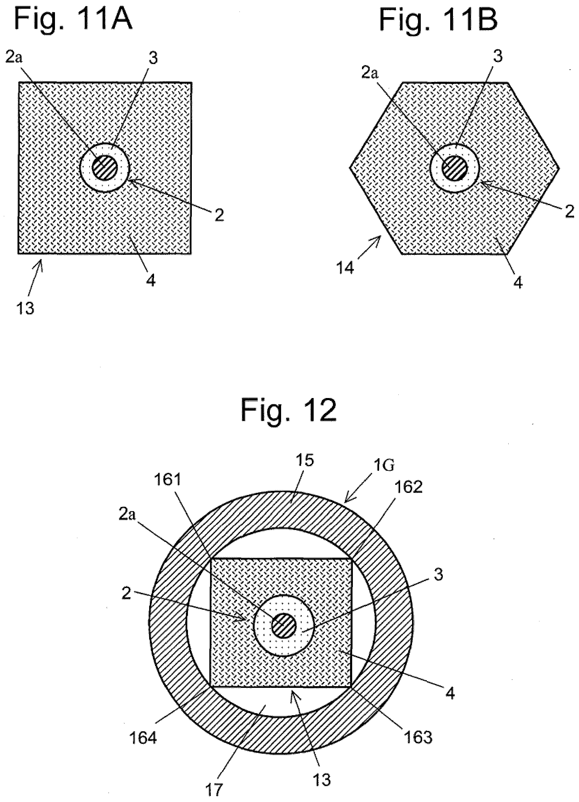

Figs. 11A and 11B each illustrate an embodiment of the optical fiber base material made by a method of the present invention. Fig. 11A illustrates an embodiment of an optical fiber base material 13 having a quadrangular external shape, and Fig. 11B illustrates an embodiment of an optical fiber base material 14 having a hexagonal external shape. Such optical fiber base materials having polygonal external shapes can be achieved by only changing the shape of a metal container. In addition, optical fiber base materials having desired shapes such as a circular external shape, a quadrangular external shape, and a polygonal external shape and including SiO₂ glass rods can be easily achieved with high dimensional precision. Accordingly, fibers suited to various purposes can be achieved.

### NINTH EMBODIMENT

Fig. 12 illustrates an embodiment of the optical fiber base material made by a method of the present invention. In the present embodiment, the optical fiber base material 13 having the quadrangular external shape, which is illustrated in Fig. 11A, is arranged in a circular SiO₂ glass tube 15 so as to be in contact with the inner surface of the SiO₂ glass tube 15 at four points (161, 162, 163, 164), and a void 17 is provided between the optical fiber base material 13 and the SiO₂ glass tube 15. As a result, the refractive index of the cladding material becomes equivalently lower, and an optical fiber base material 1G having a high numerical aperture can be achieved.

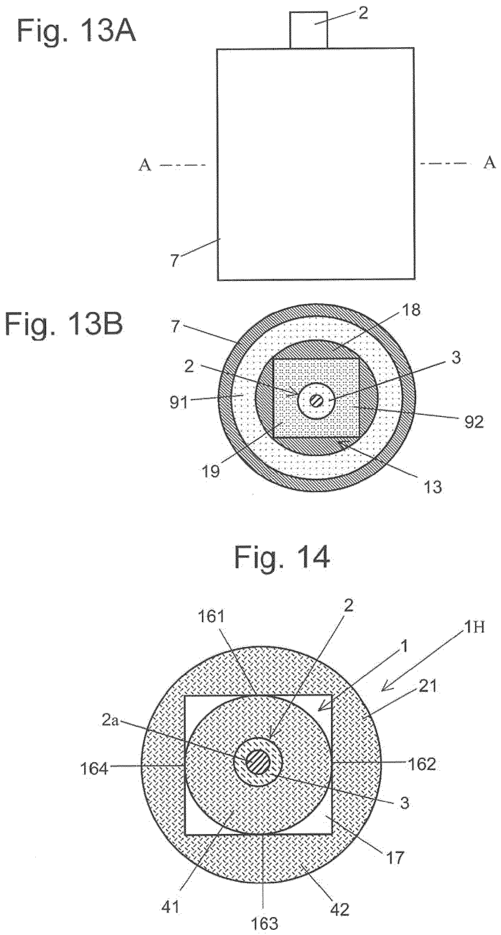

The optical fiber base material 1G is manufactured using a metal container illustrated in Figs. 13A and 13B. That is, first, a metal tube 18 having an outer diameter smaller than the inner diameter of the circular metal container 7 is arranged in the metal container 7. The metal tube 18 has a circular external shape, and a space 19 having a quadrangular internal shape exits in the metal tube 18. Then, the first base material (glass rod 2) is arranged in the center of the metal tube 18. A mixed solution 91 and a mixed solution 92 of: a SiO₂ glass raw material solution containing a hardening resin; and a hardener are respectively poured into the spaces between the metal container 7 and the metal tube 18 and between the metal tube 18 and the first base material 2. The mixed solution 91 and the mixed solution 92 are solidified through a self-hardening reaction. After that, the metal tube 18 and the metal container 7 are removed from the solidified material, and the resultant solidified material is dried and heated at high temperature.

### TENTH EMBODIMENT

Fig. 14 illustrates an embodiment of the optical fiber base material made by a method of the present invention. In the present embodiment, the base material 1 having a circular external shape is arranged in a SiO₂ glass tube 21 having a circular external shape and a quadrangular internal shape so as to be in contact with the inner surface of the SiO₂ glass tube 21 at four points (161, 162, 163, 164), and the void 17 is provided between the base material 1 and the SiO₂ glass tube 21. As a result, the refractive index of the cladding material becomes equivalently lower, and an optical fiber base material 1H having a high numerical aperture can be achieved.

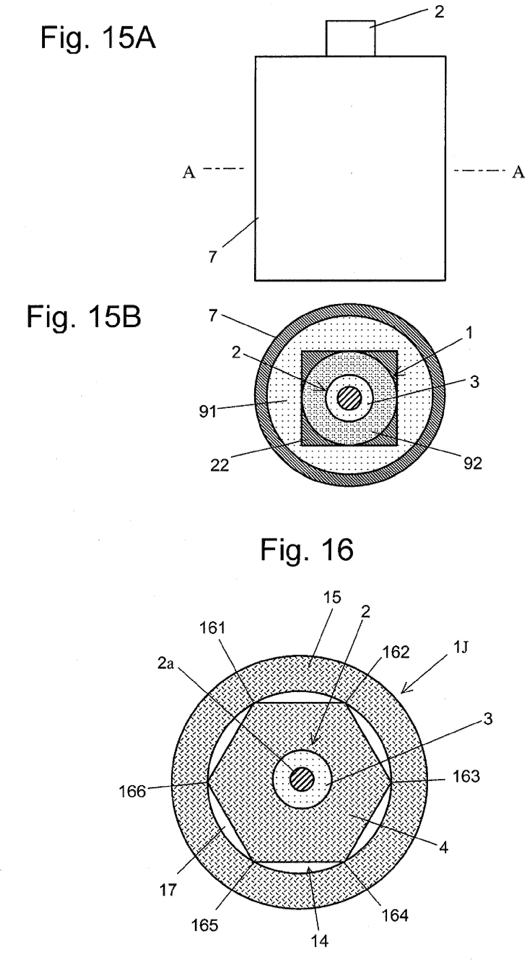

The optical fiber base material 1H is manufactured using a metal container illustrated in Figs. 15A and 15B. That is, first, a second metal container 22 having a quadrangular external shape and a circular internal shape is arranged in the circular metal container 7. Then, the first base material (glass rod 2) is arranged in the center of the second metal container 22. The mixed solution 91 and the mixed solution 92 of: the SiO₂ glass raw material solution containing the hardening resin; and the hardener are respectively poured into the spaces between the metal container 7 and the second metal container 22 and between the second metal container 22 and the first base material. The mixed solution 91 and the mixed solution 92 are solidified through a self-hardening reaction. After that, the metal container 7 and the second metal container 22 are removed from the solidified material, and the resultant solidified material is dried and heated at high temperature.

### ELEVENTH EMBODIMENT

Fig. 16 illustrates an embodiment of the optical fiber base material made by a method of the present invention. In a structure of an optical fiber base material 1J of Fig. 16, the optical fiber base material 14 having the hexagonal external shape, which is illustrated in Fig. 11B, is arranged in the circular SiO₂ glass tube 15 so as to be in contact with the inner surface of the circular SiO₂ glass tube 15 at six points (161, 162, 163, 164, 165, 166). With such a structure, the void 17 is formed between the base material 14with hexagonal external shape and the SiO₂ glass tube 15. As a result, the refractive index of the cladding material becomes equivalently lower, and the optical fiber base material 1J having a high numerical aperture can be obtained.

### TWELFTH EMBODIMENT

Figs. 17A and 17B illustrate an embodiment of the optical fiber base material of the present invention. In an optical fiber base material 1K of Figs. 17A and 17B, a high refractive index additive and a rare-earth element are added together to a center 23 of the glass rod 2. Examples of the used rare-earth element include Er, Nd, Pr, Ce, and Yb. Al, Ge, and the like may be added to the center 23 as other codoping materials than the rare-earth element. An optical amplifier and a laser can be manufactured using the optical fiber base material 1K in which the rare-earth element, Al, or Ge is added to the center 23 of the glass rod 2 as described above.

The present invention is not limited to the above-mentioned embodiments. For example, the metal containers, the metal rods, and the metal tube may be made of Au, Ni, Cu, and the like instead of stainless steel.

The blending ratio of the silica powder in the SiO₂ glass raw material solution containing the hardening resin is not limited to 87%, and may be approximately 80% to 92%.

The additive for enhancing the refractive index that is added to the center of the first base material may be Al₂O₃, P₂O₅, TiO₂, and the like instead of GeO₂.

The inner diameter Do and the length L₀ of the metal container 7 are not limited to the above-mentioned values. As the inner diameter Do and the length L₀ are larger, a longer optical fiber can be achieved. Hence, Do may be from approximately 30 mm to approximately 300 mm. L₀ may be from approximately 20 mm to approximately 1,000 mm. The diameter Dc of the first base material may be from approximately 10 mm to approximately 100 mm.

The number of the empty holes of the hole assisted optical fiber base material illustrated in Figs. 6A and 6B can be selected from a range of 4 to 30. The numbers of the empty holes of the photonic bandgap fiber base material illustrated in Figs. 7A and 7B and the photonic crystal optical fiber base material illustrated in Figs. 8A and 8B are not limited. Moreover, the empty hole diameter preferably is within a range of 0.5 µm to 5 µm The empty hole interval can be selected from a range of 1 µm to 6 µm

The empty hole diameter of the empty hole 12 in Fig. 7A preferably is within a range of 0.5 µm to 5 µm. The numbers of the first base materials of the multi-core fiber base material illustrated in Fig. 9 or the multi-core fiber base material illustrated in Figs. 10A - 10C preferably is within a range of 4 to 30. Moreover, the interval of the first base materials preferably is within a range of 20 µm to 60 µm

The outer diameter of the optical fiber base material made by any one of the methods of the present invention is not limited.

### REFERENCE SIGNS LIST

1, 1A, 1B, 1C, 1D, 1E, IF, 1G, 1H, 1J, 1K, 13, 14 ... Optical Fiber Base Material
2 ... Glass Rod (Rod Containing SiO₂ Family Glass for Core)
2a ... Center
3 ... SiO₂ Glass Layer
4 ... SiO₂ Cladding Layer
5 ... Interface
6 ... Outer Periphery
7 ... Metal Container

## Claims

1. A method for manufacturing an optical fiber base material, comprising:
arranging a rod containing SiO₂ family glass for core in a center of a container;
pouring a SiO₂ glass raw material solution for cladding layer into the container;
solidifying the glass raw material solution;
then removing the container from the solidified material; and
drying the solidified material and heating the solidified material in chlorine gas, to manufacture an optical fiber base material in which a SiO₂ cladding layer is formed in an outer periphery of the rod containing SiO₂ family glass for core;
**characterized in that**:
the step of pouring the glass raw material solution into the container includes pouring a hardening-resin-containing SiO₂ glass raw material solution for cladding layer and a hardener into the container, the glass raw material solution containing silica powder, distilled water, dispersant, and a hardening resin; and **in that**
the step of solidifying the glass raw material solution includes solidifying the glass raw material solution through a self-hardening reaction.

2. The method for manufacturing the optical fiber base material according to claim 1, further comprising:
arranging a plurality of metal rods in the container such that the metal rods surround the outer periphery of the rod containing SiO₂ family glass for core placed in the container;
then pouring the hardening-resin-containing SiO₂ glass raw material solution for cladding layer and the hardener into the container; and
removing the container and the metal rods from the solidified material, to form a plurality of empty holes in the SiO₂ cladding layer.

3. A method for manufacturing an optical fiber base material, comprising:
arranging a plurality of rods containing SiO₂ family glass for core at preset intervals in a container;
pouring a SiO₂ glass raw material solution for cladding layer into the container;
solidifying the glass raw material solution;
then removing the container from the solidified material; and
drying the solidified material and heating the solidified material in chlorine gas, to manufacture an optical fiber base material for a multi-core optical fiber;
**characterized in that**:
the step of pouring the glass raw material solution into the container includes pouring a hardening-resin-containing SiO₂ glass raw material solution for cladding layer and a hardener into the container, the glass raw material solution containing silica powder, distilled water, dispersant, and a hardening resin; and **in that**
the step of solidifying the glass raw material solution includes solidifying the glass raw material solution through a self-hardening reaction.

4. A method for manufacturing an optical fiber base material, comprising:
arranging a plurality of metal rods at preset intervals in a center of a container and around the center;
pouring a SiO₂ glass raw material solution for cladding layer into the container;
solidifying the glass raw material solution;
then removing the container and the metal rods from the solidified material; and
drying the solidified material and heating the solidified material in chlorine gas, to manufacture an optical fiber base material in which a plurality of empty holes are formed in a center of a SiO₂ cladding layer and around the center;
**characterized in that**:
the step of pouring the glass raw material solution into the container includes pouring a hardening-resin-containing SiO₂ glass raw material solution for cladding layer and a hardener into the container, the glass raw material solution containing silica powder, distilled water, dispersant, and a hardening resin; and **in that**
the step of solidifying the glass raw material solution includes solidifying the glass raw material solution through a self-hardening reaction.

5. A method for manufacturing an optical fiber base material, comprising:
arranging a plurality of metal rods at preset intervals around a center of a container;
pouring a SiO₂ glass raw material solution for cladding layer into the container;
solidifying the glass raw material solution;
then removing the container and the metal rods from the solidified material; and
drying the solidified material and heating the solidified material in chlorine gas, to manufacture an optical fiber base material in which a plurality of empty holes are formed around a center of a SiO₂ cladding layer;
**characterized in that**:
the step of pouring the glass raw material solution into the container includes pouring a hardening-resin-containing SiO₂ glass raw material solution for cladding layer and a hardener into the container, the glass raw material solution containing silica powder, distilled water, dispersant, and a hardening resin; and **in that**
the step of solidifying the glass raw material solution includes solidifying the glass raw material solution through a self-hardening reaction.

6. A method for manufacturing an optical fiber base material, comprising:
arranging a second container in a center of a first container having a circular external shape and a circular internal shape, the second container having a circular external shape and a quadrangular internal shape or having a quadrangular external shape and a circular internal shape, the second container including at least three thin parts in a wall at which an internal surface approaches an external surface;
arranging a rod containing SiO₂ family glass for core in a center of the second container;
pouring a SiO₂ glass raw material solution for cladding layer into a space between the first container and the second container and into the second container;
solidifying the glass raw material solution;
then removing the first container and the second container from the solidified material; and
drying the solidified material and heating the solidified material in chlorine gas, to manufacture an optical fiber base material;
**characterized in that**:
the step of pouring the glass raw material solution into a space between the first container and the second container and into the second container includes pouring a hardening-resin-containing SiO2 glass raw material solution for cladding layer and a hardener into a space between the first container and the second container and into the second container, the glass raw material solution containing silica powder, distilled water, dispersant, and a hardening resin; and **in that**
the step of solidifying the glass raw material solution includes solidifying the glass raw material solution through a self-hardening reaction.

## Patentansprüche

1. Verfahren zur Herstellung eines Optikfaser-Grundmaterials, umfassend:
Anordnen eines Glas der SiO₂-Familie enthaltenden Stabs als Kern in einer Mitte eines Behälters;
Gießen einer SiO₂-Glasrohmateriallösung als Mantelschicht in den Behälter;
Verfestigen der Glasrohmateriallösung;
gefolgt von Entfernen des Behälters von dem verfestigten Material; und
Trocknen des verfestigten Materials und Erhitzen des verfestigten Materials in Chlorgas, um ein Optikfaser-Grundmaterial herzustellen, bei dem eine SiO₂-Mantelschicht an einem äußeren Umfang des Glas der SiO₂-Familie enthaltenden Stabs als Kern gebildet ist;
**dadurch gekennzeichnet, dass**
der Schritt des Gießens der Glasrohmateriallösung in den Behälter umfasst: Gießen einer ein härtendes Harz enthaltenden SiO₂-Glasrohmateriallösung als Mantelschicht und eines Härters in den Behälter, wobei die Glasrohmateriallösung Siliziumoxidpulver, destilliertes Wasser, Dispergiermittel und ein härtendes Harz enthält; und dass
der Schritt des Verfestigens der Glasrohmateriallösung umfasst:
Verfestigen der Glasrohmateriallösung durch eine
Selbsthärtungsreaktion.

2. Verfahren zur Herstellung des Optikfaser-Grundmaterials nach Anspruch 1, ferner umfassend:
Anordnen einer Mehrzahl von Metallstäben in dem Behälter, derart, dass die Metallstäbe den äußeren Umfang des in dem Behälter platzierten Glas der SiO₂-Familie enthaltenden Stabs als Kern umgeben;
gefolgt von Gießen der das härtende Harz enthaltenden SiO₂-Glasrohmateriallösung als Mantelschicht und des Härters in den Behälter; und
Entfernen des Behälters und der Metallstäbe von dem verfestigen Material, um eine Mehrzahl von leeren Löchern in der SiO₂-Mantelschicht zu bilden.

3. Verfahren zur Herstellung eines Optikfaser-Grundmaterials, umfassend:
Anordnen einer Mehrzahl von Glas der SiO₂-Familie enthaltenden Stäben als Kern in vorgegebenen Abständen in einem Behälter;
Gießen einer SiO₂-Glasrohmateriallösung als Mantelschicht in den Behälter;
Verfestigen der Glasrohmateriallösung;
gefolgt von Entfernen des Behälters von dem verfestigten Material; und
Trocknen des verfestigten Materials und Erhitzen des verfestigten Materials in Chlorgas, um ein Optikfaser-Grundmaterial für eine Multikern-Optikfaser herzustellen;
**dadurch gekennzeichnet, dass**
der Schritt des Gießens der Glasrohmateriallösung in den Behälter umfasst: Gießen einer ein härtendes Harz enthaltenden SiO₂-Glasrohmateriallösung als Mantelschicht und eines Härters in den Behälter, wobei die Glasrohmateriallösung Siliziumoxidpulver, destilliertes Wasser, Dispergiermittel und ein härtendes Harz enthält; und dass
der Schritt des Verfestigens der Glasrohmateriallösung umfasst:
Verfestigen der Glasrohmateriallösung durch eine
Selbsthärtungsreaktion.

4. Verfahren zur Herstellung eines Optikfaser-Grundmaterials, umfassend:
Anordnen einer Mehrzahl von Metallstäben in vorgegebenen Abständen in einer Mitte eines Behälters und um die Mitte herum;
Gießen einer SiO₂-Glasrohmateriallösung als Mantelschicht in den Behälter;
Verfestigen der Glasrohmateriallösung;
gefolgt von Entfernen des Behälters und der Metallstäbe von dem verfestigten Material; und
Trocknen des verfestigten Materials und Erhitzen des verfestigten Materials in Chlorgas, um ein Optikfaser-Grundmaterial herzustellen, bei dem eine Mehrzahl von leeren Löchern in einer Mitte einer SiO₂-Mantelschicht und um die Mitte herum gebildet sind;
**dadurch gekennzeichnet, dass**
der Schritt des Gießens der Glasrohmateriallösung in den Behälter umfasst: Gießen einer ein härtendes Harz enthaltenden SiO₂-Glasrohmateriallösung als Mantelschicht und eines Härters in den Behälter, wobei die Glasrohmateriallösung Siliziumoxidpulver, destilliertes Wasser, Dispergiermittel und ein härtendes Harz enthält; und dass
der Schritt des Verfestigens der Glasrohmateriallösung umfasst:
Verfestigen der Glasrohmateriallösung durch eine
Selbsthärtungsreaktion.

5. Verfahren zur Herstellung eines Optikfaser-Grundmaterials, umfassend:
Anordnen einer Mehrzahl von Metallstäben in vorgegebenen Abständen um eine Mitte eines Behälters herum;
Gießen einer SiO₂-Glasrohmateriallösung als Mantelschicht in den Behälter;
Verfestigen der Glasrohmateriallösung;
gefolgt von Entfernen des Behälters und der Metallstäbe von dem verfestigten Material; und
Trocknen des verfestigten Materials und Erhitzen des verfestigten Materials in Chlorgas, um ein Optikfaser-Grundmaterial herzustellen, bei dem eine Mehrzahl von leeren Löchern um eine Mitte einer SiO₂-Mantelschicht herum gebildet sind;
**dadurch gekennzeichnet, dass**
der Schritt des Gießens der Glasrohmateriallösung in den Behälter umfasst: Gießen einer ein härtendes Harz enthaltenden SiO₂-Glasrohmateriallösung als Mantelschicht und eines Härters in den Behälter, wobei die Glasrohmateriallösung Siliziumoxidpulver, destilliertes Wasser, Dispergiermittel und ein härtendes Harz enthält; und dass
der Schritt des Verfestigens der Glasrohmateriallösung umfasst:
Verfestigen der Glasrohmateriallösung durch eine
Selbsthärtungsreaktion.

6. Verfahren zur Herstellung eines Optikfaser-Grundmaterials, umfassend:
Anordnen eines zweiten Behälters in einer Mitte eines ersten Behälters mit einer ringförmigen äußeren Form und einer ringförmigen inneren Form, wobei der zweite Behälter eine ringförmige äußere Form und eine viereckige innere Form oder eine viereckige äußere Form und eine ringförmige innere Form aufweist, wobei der zweite Behälter mindestens drei dünne Partien in einer Wand aufweist, an welchen eine innere Oberfläche an eine äußere Oberfläche angenähert ist;
Anordnen eines Glas der SiO₂-Familie enthaltenden Stabs als Kern in einer Mitte des zweiten Behälters;
Gießen einer SiO₂-Glasrohmateriallösung als Mantelschicht in einen Raum zwischen dem ersten Behälter und dem zweiten Behälter sowie in den zweiten Behälter;
Verfestigen der Glasrohmateriallösung;
gefolgt von Entfernen des ersten Behälters und des zweiten Behälters von dem verfestigten Material; und
Trocknen des verfestigten Materials und Erhitzen des verfestigten Materials in Chlorgas, um ein Optikfaser-Grundmaterial herzustellen;
**dadurch gekennzeichnet, dass**
der Schritt des Gießens der Glasrohmateriallösung in einen Raum zwischen dem ersten Behälter und dem zweiten Behälter sowie in den zweiten Behälter umfasst: Gießen einer ein härtendes Harz enthaltenden SiO₂-Glasrohmateriallösung als Mantelschicht und eines Härters in einen Raum zwischen dem ersten Behälter und dem zweiten Behälter sowie in den zweiten Behälter, wobei die Glasrohmateriallösung Siliziumoxidpulver, destilliertes Wasser, Dispergiermittel und ein härtendes Harz enthält; und dass
der Schritt des Verfestigens der Glasrohmateriallösung umfasst:
Verfestigen der Glasrohmateriallösung durch eine
Selbsthärtungsreaktion.

## Revendications

1. Procédé de fabrication d'un matériau de base de fibre optique, comprenant :
la disposition d'une barre contenant du verre de la famille de SiO₂ pour noyau dans un centre d'un récipient ;
le versement d'une solution de matière première de verre de SiO₂ pour couche de placage dans le récipient ;
la solidification de la solution de matière première de verre ;
le prélèvement subséquent du récipient du matériau solidifié ; et
le séchage du matériau solidifié et le chauffage du matériau solidifié dans du gaz de chlore, pour fabriquer un matériau de base de fibre optique dans lequel une couche de placage de SiO₂ est formée dans une périphérie externe de la barre contenant du verre de la famille de SiO₂ pour noyau ;
**caractérisé en ce que** :
l'étape de versement de la solution de matière première de verre dans le récipient comprend le versement d'une solution de matière première de verre de SiO₂ contenant une résine durcissante pour couche de placage et un agent de durcissement dans le récipient, la solution de matière première de verre contenant de la poudre de silice, de l'eau distillée, un dispersant, et une résine durcissante ; et **en ce que**
l'étape de solidification de la solution de matière première de verre comprend la solidification de la solution de matière première de verre par une réaction autodurcissante.

2. Procédé de fabrication du matériau de base de fibre optique selon la revendication 1, comprenant de plus :
la disposition de plusieurs barres de métaux dans le récipient de sorte que les barres de métaux entourent la périphérie externe de la barre contenant du verre de la famille de SiO₂ pour noyau placée dans le récipient ;
le versement subséquent de la solution de matière première de verre de SiO₂ contenant une résine durcissante pour couche de placage et l'agent de durcissement dans le récipient ; et
le prélèvement du récipient et des barres de métaux du matériau solidifié, pour former plusieurs trous vides dans la couche de placage de SiO₂.

3. Procédé de fabrication d'un matériau de base de fibre optique, comprenant :
la disposition de plusieurs barres contenant du verre de la famille de SiO₂ pour noyau à des intervalles préfixés dans un récipient ;
le versement d'une solution de matière première de verre de SiO₂ pour couche de placage dans le récipient ;
la solidification de la solution de matière première de verre ;
le prélèvement subséquent du récipient du matériau solidifié ; et
le séchage du matériau solidifié et le chauffage du matériau solidifié dans du gaz de chlore, pour fabriquer un matériau de base de fibre optique pour une fibre optique à noyaux multiples ;
**caractérisé en ce que** :
l'étape de versement de la solution de matière première de verre dans le récipient comprend le versement d'une solution de matière première de verre de SiO₂ contenant une résine durcissante pour couche de placage et un agent durcissant dans le récipient, la solution de matière première de verre contenant de la poudre de silice, de l'eau distillée, un dispersant, et une résine durcissante ; et **en ce que**
l'étape de solidification de la solution de matière première de verre comprend la solidification de la solution de matière première de verre par une réaction autodurcissante.

4. Procédé de fabrication d'un matériau de base de fibre optique, comprenant :
la disposition de plusieurs barres de métaux à des intervalles préfixés dans un centre d'un récipient et autour du centre ;
le versement d'une solution de matière première de verre de SiO₂ pour couche de placage dans le récipient ;
la solidification de la solution de matière première de verre ;
le prélèvement subséquent du récipient et des barres de métaux du matériau solidifié ; et
le séchage du matériau solidifié et le chauffage du matériau solidifié dans du gaz de chlore, pour fabriquer un matériau de base de fibre optique dans lequel plusieurs trous vides sont formés dans un centre d'une couche de placage de SiO₂ et autour du centre ;
**caractérisé en ce que** :
l'étape de versement de la solution de matière première de verre dans le récipient comprend le versement d'une solution de matière première de verre de SiO₂ contenant une résine durcissante pour couche de placage et un agent durcissant dans le récipient, la solution de matière première de verre contenant de la poudre de silice, de l'eau distillée, un dispersant, et une résine durcissante ; et **en ce que**
l'étape de solidification de la solution de matière première de verre comprend la solidification de la solution de matière première de verre par une réaction autodurcissante.

5. Procédé de fabrication d'un matériau de base de fibre optique, comprenant :
la disposition de plusieurs barres de métaux à des intervalles préfixés autour d'un centre d'un récipient ;
le versement d'une solution de matière première de verre de SiO₂ pour couche de placage dans le récipient ;
la solidification de la solution de matière première de verre ;
le prélèvement subséquent du récipient et des barres de métaux du matériau solidifié ; et
le séchage du matériau solidifié et le chauffage du matériau solidifié dans du gaz de chlore, pour fabriquer un matériau de base de fibre optique dans lequel plusieurs trous vides sont formés autour d'un centre d'une couche de placage de SiO₂ ;
**caractérisé en ce que** :
l'étape de versement de la solution de matière première de verre dans le récipient comprend le versement d'une solution de matière première de verre de SiO₂ contenant une résine durcissante pour couche de placage et un agent durcissant dans le récipient, la solution de matière première de verre contenant de la poudre de silice, de l'eau distillée, un dispersant, et une résine durcissante ; et **en ce que**
l'étape de solidification de la solution de matière première de verre comprend la solidification de la solution de matière première de verre par une réaction autodurcissante.

6. Procédé de fabrication d'un matériau de base de fibre optique, comprenant :
la disposition d'un second récipient dans un centre d'un premier récipient présentant une forme externe circulaire et une forme interne circulaire, le second récipient présentant une forme externe circulaire et une forme interne quadrangulaire ou présentant une forme externe quadrangulaire et une forme interne circulaire, le second récipient comprenant au moins trois parties minces dans une paroi sur lesquelles une surface interne approche une surface externe ;
la disposition d'une barre contenant du verre de la famille de SiO₂ pour noyau dans un centre du second récipient ;
le versement d'une solution de matière première de verre de SiO₂ pour couche de placage dans un espace entre le premier récipient et le second récipient et dans le second récipient ;
la solidification de la solution de matière première de verre ;
le prélèvement subséquent du premier récipient et du second récipient du matériau solidifié ; et
le séchage du matériau solidifié et le chauffage du matériau solidifié dans du gaz de chlore, pour fabriquer un matériau de base de fibre optique ;
**caractérisé en ce que** :
l'étape de versement de la solution de matière première de verre dans un espace entre le premier récipient et le second récipient et dans le second récipient comprend le versement d'une solution de matière première de verre de SiO₂ contenant une résine durcissante pour couche de placage et d'un agent durcissant dans un espace entre le premier récipient et le second récipient et dans le second récipient, la solution de matière première de verre contenant de la poudre de silice, de l'eau distillée, un dispersant, et une résine durcissante ; et **en ce que**
l'étape de solidification de la solution de matière première de verre comprend la solidification de la solution de matière première de verre par une réaction autodurcissante.
